# DEMANDE DE BREVET EUROPEEN

(11) **EP 2 009 545 A1**
(43) Date de publication de la demande: **31.12.2008**
(21) Numéro de dépôt: 08104243.4
(22) Date de dépôt: 04.06.2008
(51) Int. Cl.: G06F 9/44

(54) **Procédé de programmation in situ d'au moins un moyen de stockage non volatile d'un dispositif de communication sans fil, équipement de programmation et paquet à télécharger correspondants**

(30) Priorité: 28.06.2007 FR 0756131
(71) Demandeur: Wavecom, 92442 Issy-les-Moulineaux Cedex (FR)
(72) Inventeur: Odira, Karim, 92442, Issy-les-Moulineaux Cedex (FR)
(74) Mandataire: Guéné, Patrick Lucien Juan Joseph

(57) **Abrégé**

L'invention concerne un procédé de programmation in situ, par un équipement de programmation (1200), d'au moins un moyen de stockage non volatile (1310) d'un dispositif de communication (1300).

Selon l'invention, un tel procédé comprend les étapes suivantes :
- transmission, par l'équipement de programmation (1200) au dispositif de communication (1300), d'au moins un fichier d'extension ;
- transmission, par au moins un du ou des fichier d'extension, dit fichier d'extension éclaireur, d'au moins une première information de configuration du dispositif de communication (1300) ;
- sélection, par l'équipement de programmation en fonction de la ou des première information(s) de configuration du dispositif de communication, d'au moins un fichier(s) de données associé(s) à une application interne du dispositif de communication (1300) ;
- transmission, par l'équipement de programmation (1200) au(x) moyen(s) de stockage, du ou des fichier(s) de données sélectionné(s).

## Description

### 1. Domaine de l'invention

Le domaine de l'invention est celui de la production de dispositifs de communication (par exemple dans le cadre de la réalisation de terminaux de radiocommunication), et plus précisément mais non exclusivement, la programmation (installation d'au moins un logiciel et configuration dudit au moins un logiciel) de la mémoire non volatile de dispositifs de communication sans fil.

La mémoire non volatile d'un dispositif de communication sans fil contient en général un logiciel de base (ou logiciel interne) pilotant le dispositif, ainsi que des données de configuration matériel ou propres à des fonctionnalités demandées par un client.

### 2. Solutions de l'art antérieur

Dans le cadre de la production d'un dispositif de communication sans fil, il est nécessaire de programmer la ou les mémoire(s) non volatile(s) (telles que de la mémoire EEPROM, pour « Electrically Erasable and Programmable Read Only Memory » ou de la mémoire FLASH) présentes dans ce dispositif.

Il existe, pour ce faire, deux principales techniques.

Une première technique consiste à utiliser des mémoires non volatiles pré-programmées par le fabricant de mémoire. Dans ce cas, la phase de programmation des mémoires n'est pas réalisée lors de la production du dispositif mais plutôt lors de la fabrication des mémoires à l'aide d'un fichier transmis au fabricant de mémoire.

Ainsi, cette première technique permet de gagner du temps lors de la production du dispositif, mais présente l'inconvénient majeur qui est que les mémoires ne peuvent pas être configurées au moment de la production du dispositif, ce qui pose problème, ne serait-ce que, par exemple, pour introduire un numéro d'IMEI unique dans le dispositif en production. Le logiciel interne doit donc disposer d'un sous-logiciel de configuration permettant d'effectuer les opérations de configuration des mémoires en production. Un tel logiciel de configuration comprend un code qui peut prendre une place conséquente en mémoire et qui ne sert que pendant quelques minutes (la configuration) dans la vie du produit : après il s'agit de « code mort » inutile au fonctionnement nominal du produit.

Une seconde technique de programmation des mémoires non volatiles consiste en la programmation in situ (selon des techniques appelées en anglais In System Programming) de ces mémoires, le contenu des mémoires étant installé par téléchargement, via un lien de communication (par exemple un lien JTAG), dans le dispositif par un logiciel de téléchargement sur le banc de production après l'intégration physique des mémoires au sein de dispositif. La configuration du contenu des mémoires étant réalisée après le téléchargement.

Outre le fichier contenant le logiciel interne du dispositif, il est souvent nécessaire de télécharger d'autres fichiers de données, notamment des données de configuration du dispositif: des informations de version logiciel, des ensembles de fontes visuelles, messages et autres ressources propres à une langue (également appelé « language packs »), des données propres à des fonctionnalités qui doivent être mises en oeuvre sur le dispositif, .... Pour une version logicielle donnée, la foison de configurations possibles peut nécessiter la création de nombreux fichiers téléchargeables.

En conséquence, selon une première solution, le logiciel de téléchargement télécharge un paquet global à télécharger comprenant l'ensemble des fichiers correspondant à l'ensemble des configurations possibles du dispositif (et notamment des différentes versions du logiciel interne à installer sur le dispositif).

La configuration du logiciel interne dans le dispositif est réalisée après le téléchargement soit depuis le banc de production via un lien JTAG par exemple, soit automatiquement en interne dans le dispositif (ce qui implique que le paquet global doit en outre comprendre une structure de donnée spéciale décrivant pour chaque fichiers les conditions nécessaires à l'installation du fichier, ainsi que d'éventuelles opérations à effectuer avant ou après l'installation de ce fichier).

Cependant, ce paquet global est de taille importante et occupe donc un espace mémoire important dans le dispositif et son téléchargement est long et complexe.

Selon une seconde solution, le logiciel de téléchargement est paramétré pour envoyer vers le dispositif un paquet minimum comprenant uniquement les fichiers requis pour la configuration du logiciel interne souhaitée par le client et adapté au matériel.

Ainsi, un paquet minimum est une combinaison de fichiers comprenant entre autres le logiciel interne, des fichiers de configuration logicielle ainsi que des données d'activation des fonctionnalités payantes (par exemple l'utilisation du protocole GPRS classe 10, les extensions temps réel de l'environnement Open AT marque déposée,...).

Ainsi, afin de pouvoir réaliser les paquets minimum adaptés notamment à toutes les versions de logiciel interne possibles, à toutes les commandes client possibles, à toutes les versions de matériel possibles, l'opérateur du banc de production doit ainsi gérer une quantité énorme de fichiers. L'auteur du logiciel interne ou bien le développeur du banc de production doit notamment préparer plusieurs dizaines de fichiers différents avec chaque nouvelle version logicielle livrée. D'autre part, le logiciel pilotant le banc de production doit être régulièrement adapté pour prendre en compte l'apparition de nouveaux fichiers, les changements de nom ainsi que la combinaison précise à télécharger pour obtenir la configuration demandée par le client.

La complexité de ce processus est devenue telle que peu de personnes savent dresser la liste précise des fichiers à télécharger ; le problème est devenu particulièrement aigu avec l'introduction du « Wireless Microprocessor » (marque déposée) puisqu'il faut dès lors transmettre le processus de fabrication aux clients.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir une technique de programmation in situ d'au moins un moyen de stockage non volatile d'un dispositif de communication qui permette de ne télécharger dans le moyen de stockage non volatile que les fichiers requis et qui soit plus simple que les solutions existantes.

Plus précisément, un objectif de l'invention, dans au moins un de ses modes de réalisation, est de fournir une telle technique qui n'impose plus à l'opérateur de l'équipement de programmation (par exemple le banc de production) de gérer de grandes quantité de fichiers.

Un autre objectif de l'invention, dans au moins un de ses modes de réalisation, est de mettre en oeuvre une telle technique qui permette de réduire la quantité de données à télécharger dans le dispositif.

L'invention, dans au moins un de ses modes de réalisation, a encore pour objectif de fournir une telle technique qui permette d'introduire de la flexibilité dans le processus de programmation.

### 4. Exposé de l'invention

Conformément à un mode de réalisation particulier, l'invention concerne un procédé de programmation in situ, par un équipement de programmation, d'au moins un moyen de stockage non volatile d'un dispositif de communication.

Selon l'invention, le procédé de programmation est remarquable en ce qu'il comprend les étapes suivantes :
- transmission, par l'équipement de programmation au dispositif de communication, d'au moins un fichier d'extension ;
- transmission, par au moins un du ou des fichier d'extension, dit fichier d'extension éclaireur, d'au moins une première information de configuration du dispositif de communication ;
- sélection, par l'équipement de programmation en fonction de la ou des première information(s) de configuration du dispositif de communication, d'au moins un fichier(s) de données associé(s) à une application interne du dispositif de communication ;
- transmission, par l'équipement de programmation au(x) moyen(s) de stockage, du ou des fichier(s) de données sélectionné(s),
   chaque fichier d'extension étant une bibliothèque d'au moins une fonction relogeable dont l'adresse de chargement est obtenue au moyen d'au moins une instruction de relogement.

Le principe général de l'invention repose sur un processus de programmation « agile », effectuant un certain nombre d'inspections à l'aide d'au moins un fichier d'extension retournant des informations (par exemple la présence ou non de tel matériel, de tel type de mémoire ou de tel logiciel préalablement installé), puis transmettant la ou les extensions nécessaires au stockage dans tel ou tel moyen de stockage (que ce soit une mémoire non volatile, ou une interface logicielle effectuant l'enregistrement dans un système de fichiers plus complexe), et enfin transmettant les fichiers de données.

Ainsi, grâce aux inspections précitées, on obtient une technique de programmation qui permette de ne télécharger dans le moyen de stockage non volatile que les fichiers requis et qui est plus simple a mettre en oeuvre que la solution classique du fait notamment qu'il n'est plus nécessaire à l'opérateur de l'équipement de programmation (par exemple le banc de production) de gérer de grandes quantité de fichiers.

De plus cette technique permet de réduire la quantité de données à télécharger dans le dispositif de communication (du fait que l'on ne télécharge que les fichiers requis) et permet d'introduire de la flexibilité dans le processus de programmation du fait notamment des interactions entre le banc de production et le dispositif de communication.

Enfin, grâce à ce type de fichier d'extension, il est possible de réaliser une fonctionnalité de lien dynamique (entre une application de pilotage de la programmation installée sur le dispositif de communication et les fichiers d'extension) de façon efficace, que le dispositif de communication ait une unité de gestion paginée de la mémoire ou non et sans avoir recours à un système d'exploitation évolué.

Préférentiellement, au moins deux fichiers d'extension étant transmis lors de l'étape de transmission, par l'équipement de programmation au dispositif de communication, d'au moins un fichier d'extension, lesdits au moins deux fichiers d'extension interagissent au moyen d'au moins une passerelle.

Ainsi, bien que les fichiers d'extension soient des bibliothèques de fonctions relogeables, elles peuvent communiquer entre elles grâce aux passerelles.

Selon un mode de réalisation conforme à l'invention, le procédé de programmation comprend en outre une étape de compression du ou des fichier(s) de données sélectionné(s) mise en oeuvre par l'équipement de programmation avant sa ou leur transmission au(x) moyen(s) de stockage non volatile.

Ainsi, on peut économiser de la bande passante lors de la transmission du ou des fichier(s) de données sélectionné(s).

Préférentiellement, au moins une des transmissions met en oeuvre au moins l'un des protocoles de communication série appartenant au groupe comprenant :
- le protocole RS232 ;
- le protocole USB.

Avantageusement, le procédé de programmation comprend en outre une étape de réception par l'équipement de programmation d'au moins une seconde information de configuration du dispositif de communication et ladite étape de sélection tient compte de ladite seconde information de configuration du dispositif de communication.

Par exemple, la seconde information de configuration du dispositif de communication est une commande client.

Selon un mode de réalisation conforme à l'invention, l'équipement de programmation interprète au moins un scénario de programmation du dispositif de communication, ledit scénario comprenant au moins lesdites étapes de transmission et de sélection.

Préférentiellement, l'équipement de programmation comprend une première application de pilotage de la programmation au niveau de l'équipement de programmation et le procédé de programmation comprend une étape de transmission, par l'équipement de programmation au dispositif de communication, d'au moins une seconde application de pilotage de la programmation au niveau du dispositif de communication.

Avantageusement, l'équipement de programmation exécute au moins une commande distante disponible dans le dispositif de communication.

Cette commande distante peut notamment être disponible dans une application de pilotage de la programmation installée sur le dispositif de communication ou même dans un fichier d'extension préalablement installé dans le dispositif de communication.

L'invention concerne également un produit programme d'ordinateur téléchargeable depuis un réseau de communication et/ou enregistré sur un support lisible par ordinateur et/ou exécutable par un processeur, caractérisé en ce qu'il comprend des instructions de code de programme pour l'exécution des étapes du procédé de programmation tel que précédemment décrit, lorsque ledit programme est exécuté sur un ordinateur.

L'invention concerne également un moyen de stockage, éventuellement totalement ou partiellement amovible, lisible par un ordinateur, stockant un jeu d'instructions exécutables par ledit ordinateur pour mettre en oeuvre le procédé de programmation tel que précédemment décrit.

L'invention concerne également un équipement de programmation in situ d'au moins un moyen de stockage non volatile d'un dispositif de communication.

Selon l'invention, l'équipement de programmation comprend :
- des moyens de transmission, au dispositif de communication, d'au moins un fichier d' extension ;
- des moyens de réception, en provenance d'au moins un du ou des fichier d'extension, dit fichier d'extension éclaireur, d'au moins une première information de configuration du dispositif de communication ;
- des moyens de sélection, en fonction de la ou des première information(s) de configuration du dispositif de communication, d'au moins un fichier(s) de données associé(s) à une application interne du dispositif de communication ;
- des moyens de transmission, au(x) moyen(s) de stockage, du ou des fichier(s) de données sélectionné(s).

L'invention concerne également un paquet à télécharger comprenant au moins un fichier d'extension, au moins un fichier de données associé(s) à une application interne d'un dispositif de communication et au moins un scénario de programmation du dispositif de communication, ledit scénario de programmation comprenant les étapes du procédé de programmation tel que précédemment décrit.

Les avantages des produit programme d'ordinateur, moyen de stockage, équipement de programmation et paquet à télécharger sont les mêmes que ceux du procédé de programmation précité, ils ne sont pas détaillés plus amplement.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un schéma illustrant la programmation par un banc de production d'une mémoire Flash d'un microprocesseur sans fil selon un mode de réalisation particulier de l'invention ;
- la figure 2 présente les étapes principales d'un procédé de programmation du microprocesseur sans fil de la figure 1 selon le mode de réalisation particulier précité ;
- la figure 3 présente un exemple selon l'invention d'interactions entre une fonction x d'une extension X qui, lors de son exécution, nécessite une fonction y d'une extension Y ;
- la figure 4 illustre les interactions entre une extension et le fichier de contrôle interprété sur le banc de production selon un mode de mise en oeuvre particulier de l'invention.

### 6. Description d'un mode de réalisation de l'invention

### 6.1 Description d'un mode de réalisation particulier du procédé de programmation selon l'invention

On se place dans la suite dans le cadre de la production de dispositifs communication pour la réalisation de terminaux de communication sans fil.

On décrit dans la suite, dans le cadre de cette production, la phase de programmation, par un équipement de programmation (qui est par exemple un banc de production, par exemple sous la forme d'un ordinateur de type PC industriel équipé de ports série), d'un moyens de stockage non volatile, qui est par exemple une mémoire Flash, compris dans un microprocesseur sans fil (dispositif de communication) selon un mode de réalisation particulier du procédé de programmation de l'invention. Bien entendu, selon une variante de ce mode de réalisation particulier de l'invention, la mémoire Flash n'est pas comprise dans le microprocesseur mais seulement connectée au microprocesseur.

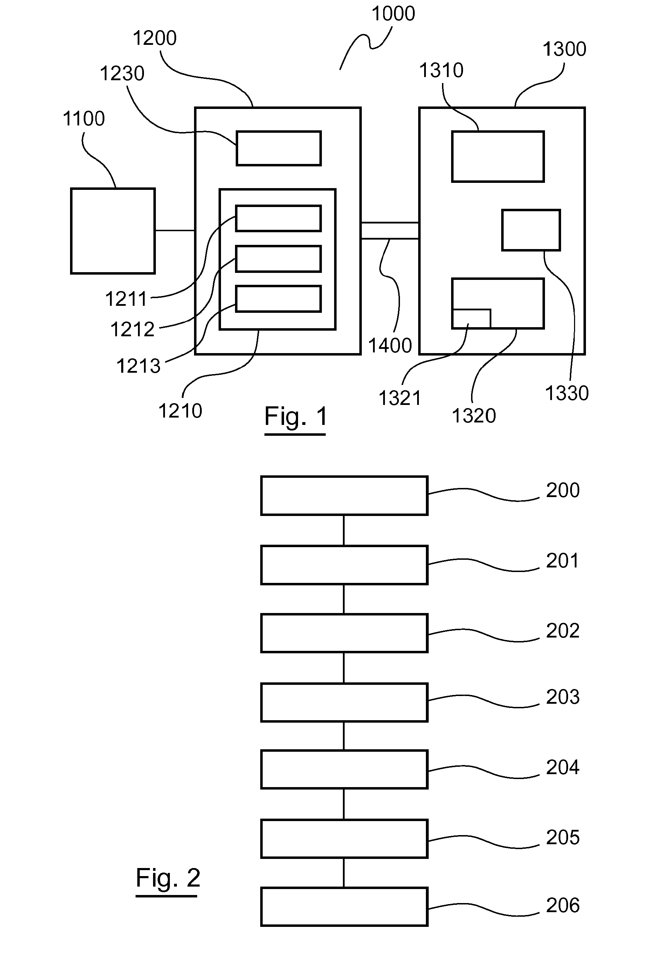

On présente, en relation avec la ***figure 1****,* un schéma d'un équipement de programmation 1000 de la mémoire Flash 1310 du microprocesseur sans fil 1300 selon le mode de réalisation particulier précité de l'invention.

Le microprocesseur 1300 comprend également une mémoire RAM 1320.

L'équipement de programmation comprend notamment :
- le banc de production 1200 qui est piloté par une première application de pilotage 1230 de la programmation au niveau du banc de production (ci-après appelée première application de pilotage) ;
- une seconde application de pilotage 1330 de la programmation au niveau du microprocesseur 1300 (ci-après appelée seconde application de pilotage) ;

Le banc de production 1200 et le microprocesseur sans fil 1300 sont reliés par un lien bidirectionnel 1400 qui est par exemple un lien conforme à un protocole série du type protocole RS232 ou protocole USB (ci-après désigné par lien série).

Préférentiellement, la première application de pilotage 1230 est commandée par un opérateur de production via une interface homme / machine 1100. Cependant, selon une variante de ce mode de réalisation particulier, le banc de production est un banc de production automatique pour lequel la première application de pilotage n'est pas commandée par un opérateur.

Le banc de production 1200 comprend un paquet de téléchargement intelligent 1210 (ci-après désigné par PTI) qui est par exemple un fichier archive compressé (de la même manière qu'un fichier au format ZIP) comprenant par exemple :
- des fichiers de données 1212 à télécharger dans le microprocesseur 1300. Les fichiers de données comprenant des fichiers de données permettant d'installer au moins un logiciel interne au microprocesseur et des fichiers de données de configuration du microprocesseur 1300 (comprenant notamment des informations de version logiciel, des informations de configuration matérielle ou des données propres à des fonctionnalités qui doivent être mises en oeuvre sur le dispositif) ;
- un fichier de contrôle 1211 (ou scénario de programmation) orchestrant la programmation et notamment le téléchargement ;
- un ou plusieurs fichiers d'extensions logicielles 1213 (comprenant notamment un fichier d'extension éclaireur 1321 permettant de détecter au moins une configuration du microprocesseur 1300).

Un fichier d'extension logicielle (ci-après désigné par extension) est un fichier inclus dans le PTI 1210 et qui doit être téléchargé dans une mémoire du dispositif de communication 1300 pour y installer de nouvelles fonctionnalités. Une extension n'est pas une application à proprement parler car elle ne s'exécute pas de façon autonome: il s'agit plutôt d'un ensemble de routines destinées à être exploitées soit directement par le noyau 1330, soit depuis des appels effectués depuis le fichier de contrôle 1211 du PTI 1210, soit depuis une autre extension.

Ces extensions 1213 permettent de découper l'ensemble du processus de téléchargement sous formes d'entités très modulaires installées en fonction du cheminement défini par l'auteur du fichier de contrôle 1211 du PTI 1210.

La première application de pilotage 1230 charge le PTI, exécute (ou plus précisément interprète) son fichier de contrôle et envoie les données adéquates au microprocesseur sans fil 1300 qui les stocke en mémoire non volatile.

Ainsi, l'équipement de programmation met en oeuvre un logiciel de programmation (également appelé logiciel de téléchargement) qui comprend la première application de pilotage 1230 (qui est par exemple une application de type WIN32) et la seconde application de pilotage 1330 (qui est par exemple un noyau du logiciel de programmation). Ainsi, le logiciel de programmation a une structure duale.

La première application de pilotage s'exécute sur le banc de production 1200. Cette application communique avec le code interne d'un processeur de bande de base du microprocesseur 1300 pour installer le noyau 1330 du logiciel de programmation sur le microprocesseur 1300. Le noyau est donc exécuté par le coeur ARM du microprocesseur 1300.

Cette structure duale se retrouve dans l'ensemble des logiciels de téléchargement pour mobiles par lien série, cependant dans la cadre du présent mode de réalisation particulier de l'invention, la spécificité est d'avoir sur le coeur ARM non plus une application complète et figée mais un noyau 1330.

Le noyau 1330 comprend, entre autres, les fonctionnalités de base nécessaires au téléchargement, telle que la gestion du lien série 1400. Le noyau 1330 est ouvert et permet de se lier dynamiquement à des « extensions logicielles » 1213 (plugins en anglais). Ainsi, chacune des extensions peut exploiter ces fonctionnalités de base offertes par le noyau.

La ***figure 2*** présente les étapes principales d'un procédé de programmation du microprocesseur sans fil de la figure 1 selon le mode de réalisation particulier précité.

Dans une étape 200, la première application de pilotage 1230 du banc de production 1200 charge le PTI 1210 et commence à interpréter le fichier de contrôle 1211 (les étapes ci-après décrites résultent de l'interprétation de ce fichier de contrôle 1211).

Dans une étape 201, la première application de pilotage 1230 du banc de production 1200 transmet, au microprocesseur 1300 par téléchargement via le lien série 1400, le noyau 1330 (seconde application de pilotage 1330) afin que celui-ci l'installe en son sein.

Puis, dans une étape 202, la première application de pilotage 1230 du banc de production 1200 transmet, au microprocesseur 1300 par téléchargement via le lien série 1400, un ensemble d'extensions comprenant l'extension éclaireur 1321 permettant de détecter au moins une configuration du microprocesseur 1300. Ensuite, chacune de ces extensions sont installées dans le microprocesseur 1300 par le noyau 1330 (notamment, l'extension éclaireur 1321 est installée par le noyau 1330 dans la mémoire RAM 1320).

Dans une étape 203, l'extension éclaireur 1321 transmet, à la première application de pilotage 1230 via le lien série 1400, au moins une première information de configuration du microprocesseur 1300 (par exemple un numéro de série, ou toute autre information relative aux caractéristiques du microprocesseur 1300).

Puis, dans une étape 204, la première application de pilotage reçoit, en provenance de l'interface homme / machine 1100 pilotée par l'opérateur de production, au moins une seconde information de configuration du microprocesseur liée à une commande passée par un acquéreur (ou client) du microprocesseur une fois produit.

Puis, dans une étape 205, la première application de pilotage 1230 réalise une sélection des fichiers de données 1212 en fonction de la ou des information(s) de configuration du microprocesseur 1300 précédemment reçue(s).

Dans une étape 206, la première application de pilotage 1230, transmet au microprocesseur 1300 par téléchargement via le lien série 1400, les fichiers de données sélectionnés, puis ces fichiers de données sont alors récupérés, éventuellement décodés par le noyau 1330 qui les stocke enfin notamment sur la mémoire flash 1310.

Ainsi, la première application de pilotage 1230 orchestre le téléchargement à l'aide du fichier de contrôle 1211 qui est un script dont l'interprétation se traduit par l'envoi d'au moins un fichier de données 1212 vers le microprocesseur 1300, l'installation d'une extension dans le microprocesseur 1300 ou l'exécution d'une commande distante disponible dans le noyau 1330 ou dans une extension préalablement installée. Ces commandes distantes permettent également de retransmettre des données depuis le microprocesseur 1300 vers la première application de pilotage 1230.

Il est ainsi possible de définir un processus de téléchargement « agile », effectuant un certain nombre d'inspections à l'aide d'extensions 1213 retournant des informations (par exemple la présence ou non de tel matériel, de tel type de mémoire ou de tel logiciel préalablement installé), puis transmettant les extensions nécessaires au stockage dans tel ou tel medium (que ce soit une mémoire non volatile, ou une interface logicielle effectuant l'enregistrement dans un système de fichiers plus complexe), et enfin transmettant les données proprement dites, piochées dans le contenu du PTI.

Préférentiellement, les données transmises sont en outre compressées pour économiser de la bande passante et décompressées par le noyau 1330 lors de leur réception.

Le processus peut encore être configuré du côté de la première application de pilotage 1230, à l'aide de paramètres utilisables par le fichier de contrôle 1211 et définies par la première application de pilotage 1230 (et/ou, le cas échéant, par opérateur de production via l'interface homme / machine 1100, cette interface étant modifiable par les instructions du fichier de contrôle 1211, ce qui permet d'avoir un processus de téléchargement interactif afin de limiter les erreurs d'un opérateur humain (à l'aide de demandes de confirmations par exemple).

La description de la commande du client est transmise à la première application de pilotage 1230 par le biais de ces paramètres, le fichier de contrôle 1211 installe alors une extension capable de décoder ce paramètre et de le transcrire sous forme de données de configuration en mémoire non volatile, le fichier de contrôle 1211 exécute enfin à distance une procédure ainsi installée en lui passant la description fournie par le banc de production 1200. Cette étape remplace les dizaines de fichiers jusque là nécessaires par une opération portable dont le paramètre d'entrée ne dépend pas du microprocesseur 1300 et est le même que celui que l'on retrouve sur le bon de commande reçu sur le site de production.

### 6.2 Les extensions

Une extension peut être dédiée à la gestion d'un périphérique donné ou à la fourniture d'une fonctionnalité fortement dépendante du microprocesseur 1300 (ou plus généralement du dispositif de communication à programmer) : deux extensions peuvent à cet effet être incompatibles entre elles, et donc ne peuvent être téléchargées ensemble vers le microprocesseur 1300. Par ailleurs, l'envoi, par le premier logiciel de pilotage 1230 dans le cadre de l'interprétation du fichier de contrôle 1211, de ces extensions peut dépendre, par exemple, grâce à des clauses conditionnelles définies par l'auteur de ce fichier de contrôle 1211, d'informations issues du noyau 1330 ou d'extensions 1213 préalablement téléchargées.

Il peut ainsi être impossible de connaître a priori la nature et l'ordre des extensions 1213 à télécharger sur le microprocesseur 1300. C'est pourquoi il n'est pas par exemple possible de regrouper/fusionner l'ensemble de ces extensions 1213 pour simplifier le téléchargement.

Selon une solution classique pour résoudre cette difficulté, les extensions sont conçues comme des bibliothèques de fonctions partagées dynamiquement. Il s'agit de charger dynamiquement, c'est-à-dire pendant l'exécution de l'application, un ensemble de routines qui peuvent être utilisées par différentes applications ou bibliothèques.

Cela impose différentes contraintes dans la conception des fonctions qui composent la bibliothèque: certaines sont résolues par les outils de compilation, d'autres le sont habituellement par le système d'exploitation. C'est en effet le système d'exploitation qui procède à l'intégration de la bibliothèque au sein de « l'écosystème » des routines en cours d'exécution. Cette phase est effectuée de manière transparente par des systèmes d'exploitation évolués mettant en oeuvre des processeurs dotés d'unités de gestion paginée de la mémoire (ou PMMU pour « Paged Memory Management Unit ») tels que les système d'exploitations Linux (marque déposée) ou Windows CE (marque déposée).

Dans le cadre du présent mode de réalisation particulier de l'invention, le logiciel de téléchargement, conçu pour occuper un minimum de ressources, ne peut embarquer de tels systèmes d'exploitation évolués. Par ailleurs, le microprocesseur 1300 est dépourvu de telles unités de gestion paginée de la mémoire.

Ainsi, dans le cadre de l'invention, la fonctionnalité de lien dynamique (entre le noyau et les extensions) est implémentée de façon efficace afin d'être utilisable au sein du noyau 1330, que le microprocesseur 1300 ait une unité de gestion paginée de la mémoire ou non, sans avoir recours à un système d'exploitation évolué.

Selon le présent mode de réalisation particulier de l'invention, l'intégration des extensions dans la mémoire du microprocesseur 1300 est réalisée en partant uniquement des informations fournies par les outils de compilation et de construction d'applications utilisés, par exemple, la suite logicielle référencée *« ARM Developer Suite 1.2* », marque déposée, commercialisée par la société ARM Limited, marque déposée.

Plus précisément, il est aisé avec cette suite logicielle de produire du code dit relogeable, c'est-à-dire qui peut être installé n'importe où en mémoire, mais au prix de restrictions gênantes quant à l'initialisation et l'utilisation de pointeurs mémoire en langage C. Tel qu'expliqué dans « What does 'Error : L6248E : cannot have address type relocation' mean » (disponible à l'adresse Internet http:/www.arm.com/support/faqdev/1240.html), on peut citer parmi ces restrictions gênantes liées au code relogeable, par exemple le cas de l'implémentations de « machines à états finis » qui utilisent une table préremplie associant chacun de ces états à des procédures gérant les transitions depuis ou vers cet état. Ce genre d'implémentation est interdit par les restrictions.

De manière plus générale, il devient impossible de reprendre du code déjà développé pour d'autres besoins pour en faire une extension sans avoir à effectuer éventuellement de lourdes transformations.

Il est en revanche plus difficile d'interagir entre des routines de bibliothèques différentes qui utilisent des données relogeables (données que l'on peut positionner à une adresse arbitraire en mémoire).

Selon le présent mode de réalisation particulier de l'invention, on réalise les extensions à partir d'un code relogeable. Ainsi, chaque extension est une bibliothèque d'au moins une fonction relogeable dont le code peut être installé n'importe où en mémoire vive et peut être ré-exploité par le noyau 1330 ainsi que par d'autres extensions.

Puis, on combine ces code et données relogeables avec des instructions de relogement (produites pendant une phase de résolution des liens). Les outils utilisés produisent ces instructions de relogement (la notion d'instructions de relogement est expliquée dans l'article du 23 janvier 2007 : « ELF for the ARM Architecture » portant la référence GENC-003538v1.04 (current in ABI r2.05) rédigé par Richard EARNSHAW et disponible à l'adresse Internet http://www.arm.com/pdfs/aaelf.pdf) pour l'architecture ARM suivant une convention aujourd'hui obsolète, mais qui permet toutefois de contourner les restrictions précitées du code relogeable. Lors de l'intégration de l'extension, ces instructions de relogement sont interprétées pour modifier le code et les données de façon à « installer » cette extension à son adresse de chargement.

La première application de pilotage 1230 a ainsi la possibilité d'apprendre au noyau 1330 à télécharger dans un nouveau type de mémoire non volatile ou au sein d'une nouvelle structure de données complexe. Elle peut aussi utiliser une extension pour obtenir du dispositif des informations qu'il n'est pas possible de recueillir sans lui faire exécuter du code.

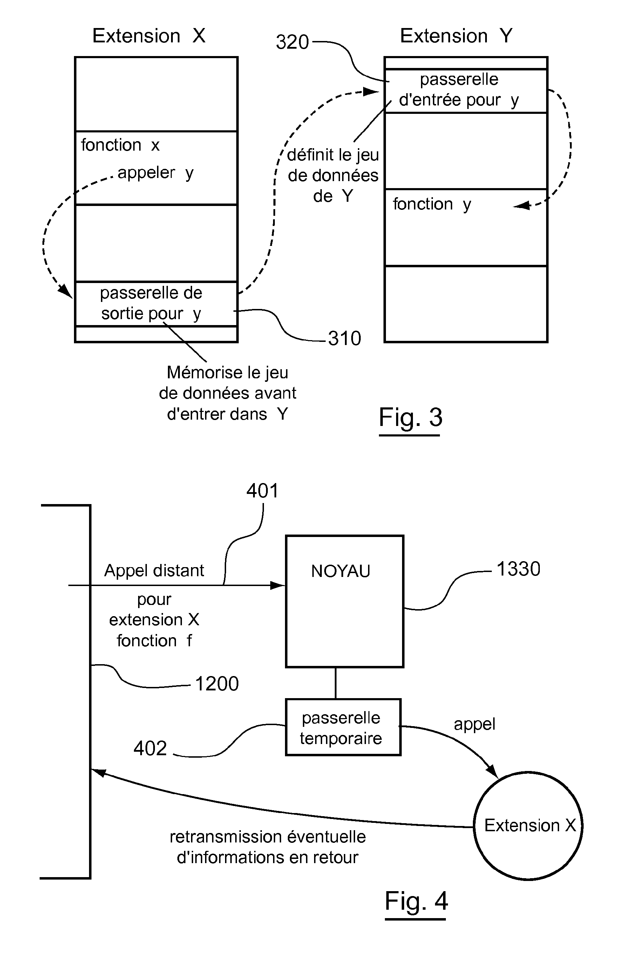

Quant aux problèmes d'interactions entre bibliothèques différentes, tel qu'illustré par la ***figure 3*** (qui présente un exemple selon l'invention d'interactions entre une fonction x d'une extension X qui, lors de son exécution, nécessite une fonction y d'une extension Y et donc qui, lors de son exécution appelle cette fonction y), ils sont résolus par la mise en place d'une passerelle de sortie pour y 310 qui mémorise le jeu de données avant d'entrer dans l'extension Y et d'une passerelles d'entrée pour y 320 qui définit le jeu de données de l'extension Y. Ainsi, il s'agit de rendre transparents les appels entre bibliothèques en y insérant les instructions nécessaires pour changer de jeu de données à utiliser.

Enfin, selon un mode de mise en oeuvre particulier de l'invention, les interactions entre une extension et le fichier de contrôle 1211 interprété sur le banc de production 1200 dépendent d'une fonctionnalité du noyau 1330.

En effet, tel qu'illustré par la ***figure 4******,*** dans le cadre d'une telle interaction, le noyau 1330 reçoit une requête 401 appelant une fonction f d'une extension X et provenant du banc de production 1200. Puis le noyau 1330 tente de rechercher l'extension X et la fonction f dans l'extension X demandée dans cette requête. Ensuite, le noyau 1330 crée une passerelle temporaire 402 vers l'extension X destinée à appeler cette fonction f et s'y branche au travers de la passerelle temporaire. Puis, le noyau récupère les informations envoyées par le banc de production à destination de la fonction f de l'extension X.

La fonction f au sein de l'extension X renvoie éventuellement vers le banc de production 1200 des informations qui sont par exemple considérées comme la valeur retournée par la fonction exécutée à distance par le fichier de contrôle 1211.

## Revendications

1. Procédé de programmation in situ, par un équipement de programmation (1200), d'au moins un moyen de stockage non volatile (1310) d'un dispositif de communication (1300),
**caractérisé en ce qu'**il comprend les étapes suivantes :
- transmission (202), par l'équipement de programmation au dispositif de communication, d'au moins un fichier d'extension ;
- transmission (203), par au moins un du ou des fichier d'extension, dit fichier d'extension éclaireur, d'au moins une première information de configuration du dispositif de communication ;
- sélection (205), par l'équipement de programmation en fonction de la ou des première information(s) de configuration du dispositif de communication, d'au moins un fichier(s) de données associé(s) à une application interne du dispositif de communication ;
- transmission (206), par l'équipement de programmation au(x) moyen(s) de stockage, du ou des fichier(s) de données sélectionné(s),
et **en ce que** chaque fichier d'extension étant une bibliothèque d'au moins une fonction relogeable dont l'adresse de chargement est obtenue au moyen d'au moins une instruction de relogement.

2. Procédé selon la revendication 1, au moins deux fichiers d'extension étant transmis lors de l'étape de transmission, par l'équipement de programmation (1200) au dispositif de communication (1300), d'au moins un fichier d'extension, **caractérisé en ce que** lesdits au moins deux fichiers d'extension interagissent au moyen d'au moins une passerelle.

3. Procédé selon l'une quelconque des revendications 1 à 2, **caractérisé en ce qu'**il comprend en outre une étape de compression du ou des fichier(s) de données sélectionné(s) mise en oeuvre par l'équipement de programmation (1200) avant sa ou leur transmission au(x) moyen(s) de stockage non volatile.

4. Procédé selon l'une quelconque des revendications 1 à 3, **caractérisé en ce que** au moins une desdites transmissions met en oeuvre au moins l'un des protocoles de communication série appartenant au groupe comprenant :
- le protocole RS232 ;
- le protocole USB.

5. Procédé selon l'une quelconque des revendications 1 à 4, **caractérisé en ce qu'**il comprend en outre une étape de réception par l'équipement de programmation (1200) d'au moins une seconde information de configuration du dispositif de communication et **en ce que** ladite étape de sélection tient compte de ladite seconde information de configuration du dispositif de communication.

6. Procédé selon l'une quelconque des revendications 1 à 5, **caractérisé en ce que** l'équipement de programmation (1200) interprète au moins un scénario de programmation du dispositif de communication, ledit scénario comprenant au moins lesdites étapes de transmission et de sélection.

7. Procédé selon l'une quelconque des revendications 1 à 6, **caractérisé en ce que** l'équipement de programmation (1200) comprend une première application de pilotage de la programmation au niveau de l'équipement de programmation et **en ce qu'**il comprend une étape de transmission, par l'équipement de programmation au dispositif de communication, d'au moins une seconde application de pilotage de la programmation au niveau du dispositif de communication.

8. Procédé selon l'une quelconque des revendications 1 à 7, **caractérisé en ce que** l'équipement de programmation (1200) exécute au moins une commande distante disponible dans le dispositif de communication.

9. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour l'exécution des étapes du procédé de programmation selon au moins une des revendications 1 à 8, lorsque ledit programme est exécuté sur un ordinateur.

10. Moyen de stockage, éventuellement totalement ou partiellement amovible, lisible par un ordinateur, stockant un jeu d'instructions exécutables par ledit ordinateur pour mettre en oeuvre le procédé de programmation selon au moins une des revendications 1 à 8.

11. Equipement de programmation (1200) in situ d'au moins un moyen de stockage non volatile (1310) d'un dispositif de communication (1300),
**caractérisé en ce qu'**il comprend :
- des moyens de transmission, au dispositif de communication, d'au moins un fichier d' extension ;
- des moyens de réception, en provenance d'au moins un du ou des fichier d'extension, dit fichier d'extension éclaireur, d'au moins une première information de configuration du dispositif de communication ;
- des moyens de sélection, en fonction de la ou des première information(s) de configuration du dispositif de communication, d'au moins un fichier(s) de données associé(s) à une application interne du dispositif de communication ;
- des moyens de transmission, au(x) moyen(s) de stockage, du ou des fichier(s) de données sélectionné(s).

12. Paquet à télécharger comprenant au moins un fichier d'extension, au moins un fichier de données associé(s) à une application interne d'un dispositif de communication (1300) et au moins un scénario de programmation du dispositif de communication, ledit scénario de programmation comprenant les étapes du procédé de programmation selon au moins une des revendications 1 à 8.
